# EUROPEAN PATENT APPLICATION

(11) **EP 3 028 838 A1**
(43) Date of publication of application: **08.06.2016**
(21) Application number: 13890796.9
(22) Date of filing: 29.07.2013
(51) Int. Cl.: B29C 67/00

(54) **3D PRINTER DEVICE, 3D PRINTING METHOD AND METHOD FOR MANUFACTURING STEREOLITHOGRAPHY PRODUCT**

(71) Applicant: NEC Solution Innovators, Ltd., Tokyo 136-8627 (JP)
(72) Inventor: IHARA Yasuyuki, Tokyo 136-8627 (JP)
(74) Representative: Vossius & Partner Patentanwälte Rechtsanwälte mbB
(86) International application number: PCT/JP2013/070490
(87) International publication number: WO 2015/015554

(57) **Abstract**

The present invention provides a 3D printer device that determines whether an object to be manufactured with a 3D printer is previously permitted to be manufactured and cannot manufacture the object when it is not. The 3D printer device of the present invention includes: a data input unit; a three-dimensional data generation unit configured to generate three-dimensional data on the basis of inputted data; a 3D printer input data generation unit configured to generate 3D printer input data from the three-dimensional data; a manufacture allowability determination unit configured to determine, on the basis of the 3D printer input data, whether an object to be manufactured with a 3D printer is allowed to be manufactured; and a 3D printer unit configured to manufacture the object only when the object is allowed to be manufactured.

## Description

### Technical Field

The present invention relates to a 3D printer device, a 3D printing method, and a method for manufacturing a three-dimensional object.

### Background Art

A 3D (three-dimensional) printer refers to a device that prepares three-dimensional (stereoscopic) data on the basis of data such as images or the like and manufactures a three-dimensional object on the basis of the three-dimensional data. Examples of the method for manufacturing the three-dimensional object include: additive manufacturing, which forms a three-dimensional object by laminating layers formed of a heat-melted resin successively on the basis of three-dimensional data; and subtractive manufacturing, which forms a three-dimensional object by cutting a solid such as a metal on the basis of three-dimensional data. With the development of 3D printers, it becomes possible for anyone (businesses and individuals alike) to make things more easily. As the 3D printers grow popular these days, remarkable progress has been made in the development of 3D printer technology. Various techniques have been proposed (see Patent Document 1, for example), whereby highly precise reproduction of an original product becomes possible.

### Citation List

### Patent Document(s)

Patent Document 1: JP 2013-86289 A

### Summary of the Invention

### Problems to Be Solved by the Invention

Improvement in performance of 3D printers enables highly precise reproduction of an original product. However, this also allows products that should not be manufactured without permission to be manufactured easily, which may cause social problems. For example, illegal manufacturing of firearms, coins, etc., forgery of seals (tools for making an impression on a document or the like), illicit copying of keys, creation of pirated copyright goods, and the like are perceived as problems.

With the foregoing in mind, it is an object of the present invention to provide a 3D printer device, a 3D printing method, and a method for manufacturing a three-dimensional object, each configured so that it determines whether an object to be manufactured with a 3D printer is previously permitted to be manufactured and cannot manufacture the object when it is not.

### Means for Solving Problem

In order to achieve the above object, the present invention provides a 3D printer device including: a data input unit; a three-dimensional data generation unit configured to generate three-dimensional data on the basis of inputted data; a 3D printer input data generation unit configured to generate 3D printer input data from the three-dimensional data; a manufacture allowability determination unit configured to determine, on the basis of the 3D printer input data, whether an object to be manufactured with a 3D printer is allowed to be manufactured; and a 3D printer unit configured to manufacture the object only when the object is allowed to be manufactured.

The present invention also provides a 3D printing method including: a data input step; a three-dimensional data generation step of generating three-dimensional data on the basis of inputted data; a 3D printer input data generation step of generating 3D printer input data from the three-dimensional data; a manufacture allowability determination step of determining, on the basis of the 3D printer input data, whether an object to be manufactured with a 3D printer is allowed to be manufactured; and a 3D printing step of manufacturing the object only when the object is allowed to be manufactured.

The present invention also provides a method for manufacturing a three-dimensional object, wherein the three-dimensional object is manufactured by the 3D printing method according to the present invention.

### Effects of the Invention

According to the present invention, it is possible to prohibit the manufacture of products that should not be manufactured without permission, such as firearms, and to manufacture only products that are permitted to be manufactured.

### Brief Description of Drawings

[FIG. 1] FIG. 1 shows an example of the configuration of the 3D printer device of the present invention.
[FIG. 2] FIG. 2 is a flowchart showing an example of the processing performed by the 3D printer device of the present invention.
[FIG. 3] FIG. 3 shows flowcharts showing an example of manufacture allowability determination in the 3D printer device of the present invention.

### Description of Exemplary Embodiments

The device of the present invention preferably is configured so that the manufacture allowability determination unit includes: a local feature value calculation unit configured to calculate a local feature value of the object on the basis of the 3D printer input data; and a global feature value calculation unit configured to calculate a global feature value of the object on the basis of the 3D printer input data, and the manufacture allowability determination unit determines whether the object to be manufactured with the 3D printer is allowed to be manufactured using at least one of the local feature value and the global feature value.

The device of the present invention preferably is configured so that, in the local feature value calculation unit, a local feature value is extracted using at least one of a specific object recognition technique and a feature extraction technique that uses a mathematical theory, and in the global feature value calculation unit, a global feature value is extracted using a feature extraction technique that uses a mathematical theory.

The device of the present invention preferably is configured so that it further includes a local feature value database and a global feature value database, wherein the determination using the local feature value is made with reference to the local feature value database, and the determination using the global feature value is made with reference to the global feature value database.

The device of the present invention preferably is configured so that it further includes a shape determination model, wherein the determination using at least one of the local feature value and the global feature value is performed by machine learning with reference to the shape determination model.

The device of the present invention preferably is configured so that the shape determination model is generated by model learning using at least one of the local feature value database and the global feature value database.

The method of the present invention preferably is configured so that the manufacture allowability determination step includes: a local feature value calculation step of calculating a local feature value of the object on the basis of the 3D printer input data; and a global feature value calculation step of calculating a global feature value of the object on the basis of 3D printer input data, and in the manufacture allowability determination step, whether the object to be manufactured with the 3D printer is allowed to be manufactured is determined using at least one of the local feature value and the global feature value.

The method of the present invention preferably is configured so that, in the local feature value calculation step, a local feature value is extracted using at least one of a specific object recognition technique and a feature extraction technique that uses a mathematical theory, and in the global feature value calculation step, a global feature value is extracted using a feature extraction technique that uses a mathematical theory.

The method of the present invention preferably is configured so that the determination using the local feature value is made with reference to the local feature value database, and the determination using the global feature value is made with reference to the global feature value database.

The method of the present invention preferably is configured so that the determination using at least one of the local feature value and the global feature value is performed by machine learning with reference to the shape determination model.

The method of the present invention preferably is configured so that the shape determination model is generated by model learning using at least one of the local feature value database and the global feature value database.

Next, the present invention will be described with reference to illustrative examples.

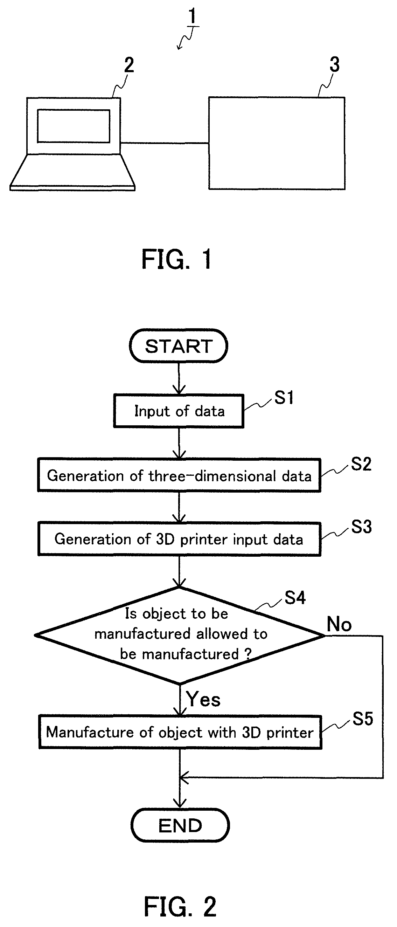

FIG. 1 is a schematic view showing an example of the 3D printer device (three-dimensional object manufacturing device) of the present invention. A 3D printer device 1 of the present example includes a control section 2 and a 3D printer 3. The control section 2 includes: a data input unit; a three-dimensional data generation unit configured to generate three-dimensional data on the basis of inputted data; a 3D printer input data generation unit configured to generate 3D printer input data from the three-dimensional data; and a manufacture allowability determination unit configured to determine, on the basis of the 3D printer input data, whether an object to be manufactured with a 3D printer is allowed to be manufactured. As the 3D printer, it is possible to use a conventional 3D printer, such as a 3D printer for additive manufacturing or a 3D printer for subtractive manufacturing, for example.

FIG. 2 is a flowchart showing the processing performed by the 3D printer device of the present example. As shown in FIG.2, in the 3D printer device of the present example, first, data is inputted by the data input unit (S1). Examples of the data to be inputted include image data, two-dimensional design drawing data, and 3D scan data of an object to be manufactured. Next, the three-dimensional data generation unit generates three-dimensional data from the inputted data (S2). Examples of the three-dimensional data include 3D-CAD data and 3D-CG data. Then, the 3D printer input data generation unit generates 3D printer input data from the three-dimensional data (S3). Examples of the 3D printer input data include polygon (approximation of a surface with triangles) data such as STL format data and VRML format data. Subsequently, the manufacture allowability determination unit determines, on the basis of the 3D printer input data, whether the object is allowed to be manufactured (S4). If it is determined that the object is not allowed to be manufactured (No), the manufacture of the object with the 3D printer is not performed, and the processing is terminated. If it is determined that the object is allowed to be manufactured (Yes), the manufacture of the object with the 3D printer is performed (S5).

In the present invention, whether the manufacture of the object is permitted (allowed) is determined depending on whether the manufacture of the object is limited by law, for example. Examples of products that are not permitted (allowed) to be manufactured include firearms, bullets, weapons, coins, seals, keys, pirated copyright goods, and products obtained by digital shoplifting.

In the present invention, techniques such as a specific object recognition technique, a feature extraction technique using a mathematical theory (differential geometry, topology, or the like), and machine learning are applicable to the manufacture allowability determination, for example.

The specific object recognition technique (including a local feature value calculation technique) is an image recognition technique for recognizing a specific object. More specifically, specific object recognition is a technique for determining whether an object of interest is the same as an object whose image has been registered beforehand by extracting a local feature value ("local" image feature value) from at least one part of an image of an object such as a coin.

In the feature extraction using a mathematical theory (differential geometry, topology, or the like), the "differential geometry" is used for numerical conversion of a "local" shape pattern of an object, such as the "curvature (the extent to which a curved surface is curved)" at a feature point, and the "topology" is used for numerical conversion of a "global" shape pattern of an object, such as, for example, "the number of holes (a 50 yen coin has one hole)" or "the number of recesses".

Machine learning is a technique that establishes rules for extracting useful information from previously collected sample data, thereby allowing useful information (attribute information, determination criteria, etc.) to be extracted even from unknown data. Machine learning can flexibly cope with unknown shapes derived from the modification and the like of firearms etc. and with the change in information accuracy of 3D data (polygon data in an STL/VRML format) inputted to the 3D printer.

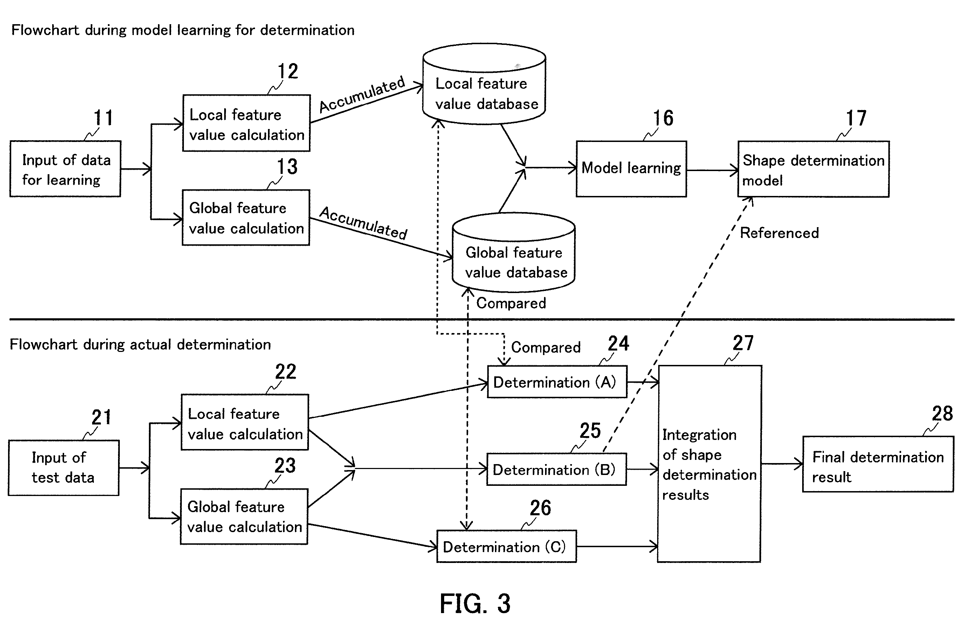

FIG. 3 shows flowcharts of the processing for determination performed by the manufacture allowability determination unit. In FIG. 3, the flowchart in the upper part shows the processing "during model learning for determination", and the flowchart in the lower part shows the processing "during actual determination".

### (During model learning for determination)

First, data for learning is inputted (11). Examples of the data for learning include 3D printer input data regarding articles to be subjected to determination as to whether the manufacture thereof is permitted (allowed), such as firearms and coins. The data for learning is inputted so that one piece of data is provided for one article.

Next, at least one of local feature value calculation 12 and global feature value calculation 13 is performed. It is preferable that both the local feature value calculation 12 and the global feature value calculation 13 are performed.

The local feature value calculation 12 calculates local feature values from parts of 3D data (STL format or VRML format) by way of feature extraction in specific object recognition ("local" image feature values, such as, e.g., SIFT feature values or SURF feature values, are extracted from parts of an image), for example. In the local feature value calculation, a plurality of local feature values generally are calculated for one piece of 3D data. Then, the calculated local feature values are accumulated in a local feature value database 14, together with the name of the object from which the data for learning is originated (e.g., a firearm, a 500 yen coin, or the like).

The local feature value calculation 12 also can be performed by, for example, numerical conversion of a local shape pattern of the object from a part of 3D data (STL format or VRML format) according to a technique using the theory of differential geometry or topology. A specific example thereof is calculation of a curvature, which indicates the extent to which a curved surface is curved. Also in this case, a plurality of local feature values generally are calculated for one piece of 3D data as in the above-described case, and the calculated local feature values are accumulated in the local feature value database 14, together with the name of the object from which the data for learning is originated (a firearm, a 500 yen coin, or the like).

The global feature value calculation 13 can be performed by, for example, numerical conversion of a global shape pattern (whole shape pattern) of the object from the whole 3D data (STL format or VRML format) according to a technique using the theory of differential geometry or topology. A specific example thereof is calculation of "the number of holes (one in the case of a 50 yen coin)", which can be calculated easily from polygon data. In the global feature value calculation 13, one or more global feature values generally are calculated from one piece of 3D data, and the calculation result is accumulated in the global feature value database 15.

Next, discriminative model learning 16 for determining the shape class of the object is performed using data accumulated in at least one of the local feature value database 14 and the global feature value database 15 (preferably using data accumulated in both of them) according to a machine learning technique, whereby a shape determination model 17 is generated. The classification of the shape of the object may be somewhat rough classification into a class with legal limitations on manufacture, such as "guns" and "coins" and a class without legal limitations on manufacture. It is not always necessary to identify the specific type of firearms or coins. However, the specific type of firearms or coins may be identified to achieve more detailed classification. The discriminative model learning is performed using LDA (Linear Discriminant Analysis), SVM (Support Vector Machine), LSPC (Least-Squares Probabilistic Classifier), k-NN (k-nearest neighbor algorithm), or the like.

### (During actual determination)

First, test data to be subjected to determination is inputted (21). The inputted data is 3D printer input data (STL format data or VRML format data). Then, in the same manner as in the above-described model learning for determination, at least one of local feature value calculation 22 and global feature value calculation 23, preferably both the local feature value calculation 22 and the global feature value calculation 23, is performed.

Next, using at least one of the local feature values and the global feature value(s), preferably using both the local feature values and the global feature value(s), whether an object to be manufactured is allowed to be manufactured is determined using at least one of the following determinations (A) to (C).

The determination (A) 24 is performed only in the case where the local feature values are calculated. The determination (A) 24 aims to identify the name or class of the object from which the test 3D data is originated. The determination (A) is performed by: comparing each of a plurality of local feature values obtained from the test 3D data with the local feature values in the local feature value database 14; voting for the name or class of an object from which the most similar local feature value is derived; performing this voting with respect to all the plurality of local feature values obtained from the test 3D data; and setting the name or class of the object that has gained the maximum number of votes to the name or class of the object from which the test 3D data is originated. On the basis of the thus-identified name or class, whether the manufacture of the object is permitted (allowed) is determined. In this case, when the maximum number of votes is smaller than the number of the local feature values obtained from the test 3D data, the name or class of the object is not identified, so that the manufacture of the object may be permitted.

The determination (B) 25 aims to identify the class of the object from which the test 3D data is originated. In the determination (B), using at least one of the local feature values and the global feature value(s), preferably using both the local feature values and the global feature value(s), the class of the object from which the test 3D data is originated is identified with reference to the shape determination model 17, and the result of the class identification is outputted. Examples of the class include a class with legal limitations on manufacture, such as "firearms" and "coins" and a class without legal limitations on manufacture.

The determination (C) 26 is performed only in the case where the global feature value(s) is calculated. The determination (C) 26 aims to identify the name or class of the object from which the test 3D data is originated. The determination (C) is performed by: comparing each of a plurality of global feature values obtained from the test 3D data with the feature values in the global feature value database 15; voting for the name or class of an object from which the same or the most similar feature value is derived; performing this voting with respect to all the plurality of global feature values obtained from the test 3D data; and setting the name or class of the object that has gained the maximum number of votes to the name or class of the object from which the test 3D data is originated. On the basis of the thus-identified name or class, whether the manufacture of the object is permitted (allowed) is determined. In this case, when the maximum number of votes is smaller than the number of the global feature values obtained from the test 3D data, the name or class of the object is not identified, so that the manufacture of the object may be permitted.

Next, the determination results obtained by at least one, preferably two, and more preferably three of the determinations (A) to (C) are integrated (shape determination result integration 27), and a final determination result 28 is outputted. In the determination result integration 27, integration of the determination results preferably is weighted integration, and the weighting preferably is set as appropriate through experience such as pre-experimentation so that the highest accuracy rate is achieved.

While the present invention has been described above with reference to illustrative embodiments, the present invention is by no means limited thereto. Various changes and modifications that may become apparent to those skilled in the art may be made in the configuration and specifics of the present invention without departing from the scope of the present invention.

### Industrial Applicability

The present invention is widely applicable to technical fields to which 3D printers pertain, and the use thereof is not limited by any means.

## Claims

1. A 3D printer device comprising:
a data input unit;
a three-dimensional data generation unit configured to generate three-dimensional data on the basis of inputted data;
a 3D printer input data generation unit configured to generate 3D printer input data from the three-dimensional data;
a manufacture allowability determination unit configured to determine, on the basis of the 3D printer input data, whether an object to be manufactured with a 3D printer is allowed to be manufactured; and
a 3D printer unit configured to manufacture the object only when the object is allowed to be manufactured.

2. The 3D printer device according to claim 1, wherein
the manufacture allowability determination unit comprises:
a local feature value calculation unit configured to calculate a local feature value of the object on the basis of the 3D printer input data; and
a global feature value calculation unit configured to calculate a global feature value of the object on the basis of the 3D printer input data, and
the manufacture allowability determination unit determines whether the object to be manufactured with the 3D printer is allowed to be manufactured using at least one of the local feature value and the global feature value.

3. The 3D printer device according to claim 2, wherein
in the local feature value calculation unit, a local feature value is extracted using at least one of a specific object recognition technique and a feature extraction technique that uses a mathematical theory, and
in the global feature value calculation unit, a global feature value is extracted using a feature extraction technique that uses a mathematical theory.

4. The 3D printer device according to claim 2 or 3, further comprising a local feature value database and a global feature value database, wherein
the determination using the local feature value is made with reference to the local feature value database, and
the determination using the global feature value is made with reference to the global feature value database.

5. The 3D printer device according to any one of claims 2 to 4, further comprising a shape determination model, wherein
the determination using at least one of the local feature value and the global feature value is performed by machine learning with reference to the shape determination model.

6. The 3D printer device according to claim 5, wherein
the shape determination model is generated by model learning using at least one of the local feature value database and the global feature value database.

7. A 3D printing method comprising:
a data input step;
a three-dimensional data generation step of generating three-dimensional data on the basis of inputted data;
a 3D printer input data generation step of generating 3D printer input data from the three-dimensional data;
a manufacture allowability determination step of determining, on the basis of the 3D printer input data, whether an object to be manufactured with a 3D printer is allowed to be manufactured; and
a 3D printing step of manufacturing the object only when the object is allowed to be manufactured.

8. The 3D printing method according to claim 7, wherein
the manufacture allowability determination step comprises:
a local feature value calculation step of calculating a local feature value of the object on the basis of the 3D printer input data; and
a global feature value calculation step of calculating a global feature value of the object on the basis of 3D printer input data, and
in the manufacture allowability determination step, whether the object to be manufactured with the 3D printer is allowed to be manufactured is determined using at least one of the local feature value and the global feature value.

9. The 3D printing method according to claim 8, wherein
in the local feature value calculation step, a local feature value is extracted using at least one of a specific object recognition technique and a feature extraction technique that uses a mathematical theory, and
in the global feature value calculation step, a global feature value is extracted using a feature extraction technique that uses a mathematical theory.

10. The 3D printing method according to claim 8 or 9, wherein
the determination using the local feature value is made with reference to the local feature value database, and
the determination using the global feature value is made with reference to the global feature value database.

11. The 3D printing method according to any one of claims 8 to 10, wherein
the determination using at least one of the local feature value and the global feature value is performed by machine learning with reference to the shape determination model.

12. The 3D printing method according to claim 11, wherein
the shape determination model is generated by model learning using at least one of the local feature value database and the global feature value database.

13. A method for manufacturing a three-dimensional object, wherein
the three-dimensional object is manufactured by the 3D printing method according to any one of claims 7 to 12.
